# EUROPEAN PATENT APPLICATION

(11) **EP 4 092 089 A1**
(43) Date of publication of application: **23.11.2022**
(21) Application number: 22174544.1
(22) Date of filing: 20.05.2022
(51) Int. Cl.: C09D 11/16, C09D 11/18

(54) **MARKING COMPOSITIONS**

(30) Priority: 21.05.2021 US 202163191350 P
(71) Applicant: Sanford, L.P., Atlanta, GA 30328 (US)
(72) Inventor: KWAN, Vincent, Georgia, 30022 (US); ZHU, Jiandong, Georgia, 30328 (US); PRATER, Roni, Georgia, 30028 (US); KROON, Jennifer, Georgia, 30309 (US); PULIKANDLA, Suchithra, 517126 Andhra Pradesh (IN); MURALEEDHARAN, Deepthi V, 673611 Kerala (IN)
(74) Representative: Deb, Roona

(57) **Abstract**

A marking composition may include an aqueous carrier and thermochromic capsules. The thermochromic capsules may include a leuco dye, an activator, and a temperature regulator. The thermochromic capsules may have a volume average size effective to resist temperature-mediated discoloration at a temperature of at least up to 40 °C by dissipating heat. In some embodiments, the marking composition marks a substrate with a substantially erasable mark, for example, in response to frictional contact with an eraser.

## Description

### BACKGROUND

### 1. TECHNICAL FIELD

The present disclosure relates generally to marking compositions, for example, erasable compositions for writing instruments.

### 2. DESCRIPTION OF THE RELATED ART

Writing instruments may mark surfaces with marking compositions. Some marking compositions are indelible, for example, permanent ballpoint ink markings. Other markings are erasable, for example, pencil markings. Certain marking compositions have an appearance similar to conventional ballpoint ink, but are erasable, for example, by frictional contact with an eraser. The erasure may be irreversible.

Certain erasable compositions decolorize at relatively low temperatures, for example, temperatures experienced during storage or transport. Thus, writing instruments including such compositions may ultimately not be usable by end users to mark surfaces, if previously discolored. There remains a need for erasable compositions that are resist such unintended or premature decolorization, for example, being stable at higher temperatures that may be experienced during storage or transport.

### SUMMARY

The present disclosure describes marking compositions including thermochromic capsules, and where the capsules have a size effective to dissipate heat to resist thermal discoloration.

In embodiments, a marking composition includes an aqueous carrier and thermochromic capsules. The thermochromic capsules may include a leuco dye, an activator, and a temperature regulator. The thermochromic capsules may have a volume average size effective to resist temperature-mediated discoloration at a temperature of at least up to 40 °C by dissipating heat. In some embodiments, the marking composition marks a substrate with a substantially erasable mark, for example, in response to frictional contact with an eraser.

In embodiments, a marking composition includes a thermochromic slurry. The thermochromic slurry may include thermochromic capsules including a leuco dye, an activator, and a temperature regulator. The marking composition may further include water, for example, as a carrier. The marking composition may further include glycerol, for example, as a humectant. The marking composition may further include a defoamer including an emulsion of a polyether siloxane copolymer. The marking composition may further include a biocide including sodium omadine. The thermochromic capsules may have a volume average size from 1 micron to 10 microns so that the composition is configured to resist temperature-mediated discoloration at a temperature of at least up to 40 °C. The composition may have a pH in a range of 7.5 to 11.

### DETAILED DESCRIPTION

The present disclosure describes marking compositions, for example, erasable or colorchanging compositions, that are erasable by heat, yet stable to typical temperatures experienced during storage or transport. Conventional erasable inks may include thermochromic inks, which are erasable by heat, for example, frictional heat generated by contact with an eraser. However, conventional inks may prematurely discolor in response to elevated temperatures experienced during storage or transport, for example, 50 °C. Thus, conventional inks may get discolored during storage or transport, and be unusable for marking surfaces after storage or transport. For example, writing instruments containing such inks subjected to elevated temperatures may be rendered unusable for writing by an end user.

Marking compositions according to the present disclosure may include thermochromic capsules having a size effective to resist thermal discoloration, which, without being limited by any particular theory, may be by facilitating heat dissipation. Thus, writing instruments including compositions according to the present disclosure may retain sufficient color intensity to mark surfaces even if subjected to elevated temperatures during storage or transport.

Marking compositions used for writing instruments typically include components having relatively small particle sizes (for example, average geometric size), to promote even flow of the composition through a writing tip of the instrument, and to promote smooth and even markings. For example, in writing instruments such as a ballpoint pen, using relatively small particle sizes may reduce or prevent blockage of flow through or about a ball of a ballpoint tip.

Thus, thermochromic microcapsules having relatively large particle sizes were not contemplated for use or actually used in writing instruments. For example, conventional thermochromic microcapsules used in marking compositions or in writing instruments had a particle size of much less than 1 micrometers.

The inventors of the present disclosure surprisingly found that thermochromic capsules could be provided in marking compositions suitable for use with writing instruments, despite having relatively large particle sizes, for example, volume average particles sizes of 1 micrometer or greater. It was also surprisingly found that using thermochromic capsules having a relatively particle size promoted resisted thermal discoloration at elevated temperatures associated, such as temperatures of at least up to 40 °C, or at least up to 50 °C, or at least up to 60 °C, or at least up to 70 °C, or temperatures from 40 °C to 70 °C. Without being bound by theory, the relatively large particle size is believed to promote heat dissipation, which reduces the effective temperature experienced by the particles. Further, bigger particles will exhibit a lower temperature surge, for the same amount of heat applied, because bigger particles have a higher specific latent heat capacity.

In embodiments, a marking composition includes an aqueous carrier and thermochromic capsules. The thermochromic capsules may include a leuco dye, an activator, and a temperature regulator. The thermochromic capsules may have a volume average size effective to resist temperature-mediated discoloration at a temperature of at least up to 40 °C by dissipating heat. In some embodiments, the marking composition marks a substrate with a substantially erasable mark, for example, in response to frictional contact with an eraser.

In embodiments, a marking composition includes a thermochromic slurry. The thermochromic slurry may include thermochromic capsules including a leuco dye, an activator, and a temperature regulator. The marking composition may further include water, for example, as a carrier. The marking composition may further include glycerol, for example, as a humectant. The marking composition may further include a defoamer including an emulsion of a polyether siloxane copolymer. The marking composition may further include a biocide including sodium omadine. The thermochromic capsules may have a volume average size from 1 micron to 10 microns so that the composition is configured to resist temperature-mediated discoloration at a temperature of at least up to 40 °C. The composition may have a pH in a range of 7.5 to 11.

In some embodiments, marking compositions according to the present disclosure exhibit partial or incomplete decolorization at temperatures as high as 40 °C, or 50 °C, or 60 °C, or 70 °C. For example, marking compositions may retain sufficient color intensity to visibly mark surfaces even after exposure to temperatures from 40 °C to 70 °C.

Any suitable aqueous carrier may be used to form the marking compositions, for example, water. The carrier may consist essentially of or consist of deionized water, for example, to reduce or prevent potential negative effect on ink associated with impurities present in tap water. The aqueous carrier may be present in any suitable concentration, for example, as a balance of the other components present in the marking composition. In some embodiments, the aqueous carrier is present in a range of 10 to 80 % by weight.

Thermochromic capsules may be suspended or dispersed in the aqueous carrier. The thermochromic capsules may include a leuco dye, an activator, and a temperature regulator.

Leuco dyes are dyes that are colorless until activation. Any suitable leuco dye may be used, alone or in combination with other leuco dyes or colorants. For example, the thermochromic capsules may include one or more leuco dyes including fluorans, phthalides, amino-triarylmethanes, aminoxanthenes, aminothioxanthenes, amino-9,10-dihydro-acridines, aminophenoxazines, aminophenothiazines, aminodihydro-phenazines, aminodiphenylmethanes, aminohydrocinnamic acids (cyanoethanes, leuco methines) and corresponding esters, 2(p-hydroxyphenyl)-4,5-diphenylimidazoles, indanones, leuco indamines, hydrozines, leuco indigoid dyes, amino-2,3-dihydroanthraquinones, tetrahalo-p,p'-biphenols, 2(p-hydroxyphenyl)4,5-diphenylimidazoles, phenethylanilines, and mixtures thereof.

In embodiments, the leuco dye is a fluoran, phthalide, aminotriarylmethane, or a mixture thereof. Fluoran based leuco dyes may include 3-diethylamino-6-methyl-7-anilinofluorane, 3-(N-ethyl-p-toluidino)-6-methyl-7-anilinofluorane, 3-(N-ethyl-N-isoamylamino)-6-methyl-7-anilinofluorane, 3-diethylamino-6-methyl-7-(o,p-dimethylanilino)fluorane, 3-pyrrolidino-6-methyl-7-anilinofluorane, 3-piperidino-6-methyl-7-anilinofluorane, 3-(N-cyclohexyl-N-methylamino)-6-methyl-7-anilinofluorane, 3-diethylamino-7-(m-trifluoromethylanilino)fluorane, 3-dibutylamino-6-methyl-7-anilinofluorane, 3-diethylamino-6-chloro-7-anilinofluorane, 3-dibutylamino-7-(o-chloroanilino)fluorane, 3-diethylamino-7-(o-chloroanilino)fluorane, 3-di-n-pentylamino-6-methyl-7-anilinofluoran, 3-di-n-butylamino-6-methyl-7-anilinofluoran, 3-(n-ethyl-n-isopentylamino)-6-methyl-7-anilinofluoran, 3-pyrrolidino-6-methyl-7-anilinofluoran, 1 (3H)-isobenzofuranone,4,5,6,7-tetrachloro-3,3-bis[2-[4-(dimethylamino)phen yl]-2-(4-methoxyphenyl)ethenyl], and mixtures thereof.

Aminotriarylmethane leuco dyes can also be used, for example, tris(N,N-dimethylaminophenyl) methane (LCV); deutero-tris(N,N-dimethylaminophenyl)methane (D-LCV); tris(N,N-diethylaminophenyl) methane(LECV); deutero-tris(4-diethylaminolphenyl) methane (D-LECV); tris(N,N-di-n-propylaminophenyl) methane (LPCV); tris(N,N-di-n-butylaminophenyl) methane (LBCV); bis(4-diethylaminophenyl)-(4-diethylamino-2-methylphenyl) methane (LV-1); bis(4-diethylamino-2-methylphenyl)-(4-diethylamino-phenyl) methane (LV-2); tris(4-diethylamino-2-methylphenyl) methane (LV-3); deutero-bis(4-diethylaminophenyl)-(4-diethylamino-2-methylphenyl) methane (D-LV-1); deutero-bis(4-diethylamino-2-methylphenyl)(4-diethylaminophenyl) methane (D-LV-2); bis(4-diethylamino-2-methylphenyl)(3,4-dimethoxyphenyl) methane (LB-8); aminotriarylmethane leuco dyes having different alkyl substituents bonded to the amino moieties wherein each alkyl group is independently selected from C1-C4 alkyl; and aminotriaryl methane leuco dyes with any of the preceding named structures that are further substituted with one or more alkyl groups on the aryl rings wherein the latter alkyl groups are independently selected from C1-C3 alkyl.

Other leuco dyes may also be used. Some examples of leuco dyes are described in U.S. Pat. Nos. 3,658,543, 6,251,571, and 6,958,181, each of which are hereby incorporated by reference in their entireties.

Activators are compounds that cause the leuco dyes to develop color, for example, a visually perceptible color. In embodiments, an activator includes an active proton. For example, the activator may include a compound having a phenolic hydroxyl group, including monophenols and polyphenols, which may have a substituent such as alkyl, aryl, acyl, alkoxycarbonyl, carboxyl and esters and amides thereof, and halogen, bis type phenols, tris type phenols, phenol-aldehyde condensation resins, or the like. A salt of the phenolic hydroxyl group of the above compounds may be used as an activator.

In embodiments, the activator may include one or more of phenol, o-cresol, t-butylcatechol, nonylphenol, n-octylphenol, n-dodecylphenol, n-stearylphenol, p-chlorophenol, p-bromophenol, o-phenylphenol, 4-(1-methylethoxyphenyl)sulfonylphenol, 4-(4-butoxyphenyl)sulfonylphenol, 4-(4-pentyloxyphenyl)sulfonylphenol, 4-(4-hexyloxyphenyl)sulfonylphenol, 4-(4-heptyloxyphenyl)sulfonylphenol, 4-(4-octyloxyphenyl)sulfonylphenol, n-butyl p-hydroxybenzoate, n-octyl p-hydroxybenzoate, resorcin, dodecyl gallate, 2,2-bis(4'-hydroxyphenyl)propane, 4,4-dihydroxydiphenyl sulfone, 1,1-bis(4'-hydroxyphenyl)ethane, 2,2-bis(4'-hydroxy-3-methylphenyl)propane, bis(4-hydroxyphenyl) sulfide, 4-hydroxy-4'-isopropoxydiphenyl sulfone 1-phenyl-1,1-bis(4'-hydroxyphenyl)ethane, 1,1-bis(4'-hydroxyphenyl)-3-methylbutane, 1,1-bis(4'-hydroxyphenyl)-2-methylpropane, 1,1-bis(4'-hydroxyphenyl)-n-hexane, 1,1-bis(4'-hydroxyphenyl)-n-heptane, 1,1-bis(4'-hydroxyphenyl)-n-octane, 1,1-bis(4'-hydroxyphenyl)-n-nonane, 1,1-bis(4'-hydroxyphenyl)-n-decane, 1,1-bis(4'-hydroxyphenyl)-n-dodecane, 2,2-bis(4'-hydroxyphenyl)butane, 2,2-bis(4'-hydroxyphenyl)ethyl propionate, 2,2-bis(4'-hydroxyphenyl)-4-methylpentane, 2,2-bis(4'-hydroxyphenyl)hexafluoropropane, 2,2-bis(4'-hydroxyphenyl)-n-heptane, 2,2-bis(4'-hydroxyphenyl)-n-nonane, or the like.

Temperature regulators are compounds that control the temperature wherein the color transition occurs. In embodiments, the temperature regulator in the thermochromic capsules may include one or more of decyl alcohol, monovalent aliphatic saturated undecyl alcohol, an alcohol having 10 or more dodecyl alcohol carbon atoms, tridecyl alcohol, tetradecyl alcohol, pentadecyl alcohol, hexadecyl alcohol, heptadecyl alcohol, octadecyl alcohol, eicodecyl alcohol, docosyl alcohol, or the like.

In embodiments, the temperature regulator may include one or more of (ester-1) ethyl caprylate esters having 10 or more carbon atoms, for example, octyl caprylate, stearyl caprylate, docosyl caprate, stearyl myristate, cetyl caprate, or myristyl caprate. In embodiments, the esters include esters obtained by arbitrary combination of monovalent carboxylic acid, stearyl caprate having aliphatic and alicyclic 2-ethylhexyl laurate or aromatic ring and n-decyl laurate monovalent alcohol having 3-methylbutyl myristate aliphatic and alicyclic or cetyl myristate aromatic ring, esters obtained by arbitrary combination of isopropyl palmitate polyvalent carboxylic acid neopentyl palmitate having aliphatic and alicyclic nonyl palmitate or aromatic ring and stearyl palmitate monovalent alcohol having cyclohexyl palmitate aliphatic and alicyclic or n-Butyl stearate aromatic ring, and esters 2-methylbutyl stearate obtained by arbitrary 3,5,5-Trimethylhexyl stearate combination of monovalent n-undecyl stearate carboxylic acid having pentadecyl stearate aliphatic and alicyclic or Stearyl stearate aromatic ring and polyvalent cyclohexylmethyl stearate alcohol having aliphatic and Isopropyl behenate alicyclic or aromatic ring.

In embodiments, the temperature regulator may include one or more of hexyl behenate, lauryl behenate, behenyl behenate, cetyl benzoate, stearyl p-tert-butylbenzoate, dimyristyl phthalate, distearyl phthalate, dimyristyl oxalate, dicetyl oxalate, dicetyl malonate, dilauryl succinate, dilauryl glutarate, diundecyl adipate, dilauryl azelate, or di-(n-nonyl) sebacate.

In embodiments, the temperature regulator may include one or more of aliphatic ketones of 10 to 22 total carbons. Such ketones may include 2-decanone, 3-decanone, 4-decanone, 2-undecanone, 3-undecanone, 4-undecanone, 5-undecanone, 6-undecanone, 2-dodecanone, 3-dodecanone, 4-dodecanone, 5-dodecanone, 2-tridecanone, 3-tridecanone, 2-tetradecanone, 2-pentadecanone, 8-pentadecanone, 2-hexadecanone, 3-hexadecanone, 9-heptadecanone, 2-pentadecanone, 2-octadecanone, 2-nonadecanone, 10-nonadecanone, 2-eicosanone, 11-eicosanone, 2-henicosane, 2-docosanone, or the like.

In embodiments, the temperature regulator may include one or more of aryl alkyl ketones of 12 to 24 total carbons. Such ketones may include n-octadecaphenone, n-heptadecaphenone, n-hexadecaphenone, n-pentadecaphenone, n-tetradacaphenone, 4-n-docecanoacetophenone,, n-tridecanophenone, 4-n-undecanoacetophenone, n-laurophenone, 4-n-decanoacetophenone, n-undecanophenone, 4-n-nonylacetophenone, n-decanophenone, 4-n-octylacetophenone, n-nonanophenone, 4-n-heptylacetophenone, n-octanophenone, 4-n-hexylacetophenone, 4-n-cyclohexylacetophenone, 4-t-butylpropiophenone, n-heptanophenone, 4-n-pentylacetophenone, cyclohexyl, phenyl ketone, benzyl n-butyl ketone, 4-n-butylacetophenone, n-hexanophenone, 4-isobutylacetophenone, 1-acetonaphthone, 2-acetonaphthone, cyclopentyl phenyl ketone, and the like.

Thus, thermochromic capsules may include one or more leuco dye, one or more activator, and one or more temperature regulator. The population of thermochromic capsules may have a substantially identical composition, for example, having the same constituents with the same concentrations, or may have different compositions, for example, the same constituents with different concentrations, or different constituents with different concentrations. For example, different thermochromic capsules may have the same or different type or concentration of one or more of leuco dye, activator, or temperature regulator.

Any suitable concentration or relative ratio of these components of thermochromic capsules may be used.

The thermochromic capsules may be formed by any suitable technique, for example, microencapsulation. In embodiments, a core composition may be encased with a shell material, allowing materials to be used in an aqueous medium. Encapsulation of the core composition may enhance the serviceable temperature range. The core composition may include the leuco dye, the activator, and the temperature regulator. In embodiments, thermochromic capsules may be formed by physicochemical methods (for example, simple or complex coacervation, separation of organic phase, and liposomal wrapping), physical methods (for example, spraydrying, spray chilling, spray coating, fluidized bed, extrusion, centrifugation with multiple orifices, co-crystallization, and lypophilization), or chemical methods (for example, interfacial polymerization, molecular inclusion or in-situ polymerization), or combinations thereof. Other techniques like solution-curing coating, phase separation from an aqueous solution, phase separation from an organic solvent solution, melt-dispersion cooling, gas suspension coating may also be used.

In embodiments, the surface of the microcapsules may further be coated by a secondary film of a resin to give durability to the microcapsules or to impart predetermined surface properties to the microcapsules.

In embodiments, the thermochromic capsules may be present in the form of an aqueous slurry or concentrate. In embodiments, a slurry of capsules with more than 60% of water is used to allow better control of final formulation viscosity.

In embodiments, the thermochromic capsules have a volume average size effective to resist temperature-mediated discoloration at a temperature of at least up to 40 °C by dissipating heat. For example, the thermochromic capsules may have a volume average size of at least 1 micrometer. In some embodiments, the thermochromic capsules may have a volume average size sufficiently small to permit smooth and even marking by allowing flow through a writing instrument. For example, the thermochromic capsules may have a volume average particle size of 10 micrometers or less. In some embodiments, the thermochromic capsules have a volume average size in a range from 1 micron to 10 microns. In some such embodiments, the thermochromic capsules have a volume average size in a range from 1 micron to 5 microns.

The thermochromic capsules may be present in the marking composition in any suitable concentration for providing a predetermined color or appearance to a mark generated by the marking composition. For example, the thermochromic capsules may be present in a range of 5 to 70 % by weight.

The thermochromic capsules may have any suitable shape, for example, spherical, substantially spherical, cylindrical, ellipsoidal, oval, or any other shape. In embodiments in which the capsules are spherical or substantially spherical, the term "size" refers to a diameter of the capsules. In embodiments in which the capsules are non-spherical, the term "size" refers to a maximum dimension of the capsules, for example, a longest dimension along any axis passing through the capsule.

Marking compositions according to the disclosure may be used to mark a substrate, for example, paper, non-woven material, cellulosic or non-cellulosic substrates, metal or alloy, ceramic, glass, or other substrates. For example, a writing instrument may contain and deliver the marking composition through a writing tip to a substrate to leave a mark in contract with the substrate.

In embodiments, the mark changes appearance in response to frictional contact with an eraser. For example, the mark may be substantially erasable in response to the frictional contact, and may disappear from visible perception. Frictional contact generates heat, and the associated rise in temperature may cause the mark to be erased. For example, the frictional contact may raise the temperature of thermochromic capsules present in the mark to a temperature sufficiently high to induce temperature-mediated discoloration of the thermochromic capsules. For example, the thermochromic capsules may exhibit temperature-mediated discoloration at a temperature of greater than 40 °C, or greater than 50 °C, or greater than 60 °C, or greater than 70 °C, or greater than 80 °C. In some embodiments, the thermochromic capsules may exhibit complete temperature-mediated discoloration at a temperature of greater than 40 °C, or greater than 50 °C, or greater than 60 °C, or greater than 70 °C, or greater than 80 °C, so that the mark is substantially invisible subsequent to frictional contact generating such temperatures. In embodiments, the thermochromic capsules may exhibit complete temperature-mediated discoloration at a temperature that is greater than a temperature range associated with storage and transport.

Thus, marking compositions according to the disclosure may only discolor when intended, in response to frictional contact, and exhibit no discoloration or only partial discoloration even if elevated temperatures are experienced prior to use for marking, for example, during storage or transport of the marking compositions, alone or within writing instruments including the marking compositions.

In some such embodiments, the erased mark may or may not be visible in non-visible wavelengths, for example, under ultraviolet light.

In some embodiments, the mark may not be erased in response to frictional contact. Instead, the mark may exhibit a change a color. For example, a marking composition may further include a non-thermochromic colorant, and the mark may be configured to change color in response to the frictional contact. For example, initially, both the color of the thermochromic capsules and the non-thermochromic colorant may combine as a visible combined color. The non-thermochromic colorant may have a color different in one or more of hue, intensity, or saturation from the thermochromic capsules. Thus, when the thermochromic capsules are discolored, for example, in response to frictional contact, only the color component attributable to the non-thermochromic colorant would persist and remain visible. Thus, in some embodiments, marking compositions according to the disclosure may exhibit a color change in response to frictional contact, for example, with an eraser.

In embodiments, the non-thermochromic colorant includes a pigment (i.e., insoluble or particulate colorant), a dye (i.e., soluble colorants), or any other suitable agent compatible with the composition components. In some embodiments, the non-thermochromic colorant is present in a range of 0.1% to 40 % by weight.

Non-thermochromic colorants may be erasable or non-erasable in response to frictional contact, with an eraser. For example, non-thermochromic colorants may be used to enhance the color vibrancy of a marking composition. Without being bound by theory, marking compositions including only thermochromic capsules may be less vibrant due to a refractive index mismatch between the core material and the shell materials of the capsules.

Colorant compositions such as aqueous solutions containing dyes, or aqueous dispersions containing pigments may also be used.

The colorant may include a water-soluble dye. The water-soluble dye may include one or both of anionic or cationic dyes. Those dye may be basic, acidic, direct, or reactive. The dye may include one or more of Food Black No. 1, Food Black No. 2, Food Red No. 40, Food Blue No. 1, Food Yellow No. 7, and the like; FD & C dyes; Acid Black dyes (No. 1, 7, 9, 24, 26, 48, 52, 58, 60, 61, 63, 92, 107, 109, 118, 119, 131, 140, 155, 156, 172, 194, and the like); Acid Red dyes (No. 1, 8, 32, 35, 37, 52, 57, 92, 115, 119, 154, 249, 254, 256, and the like), Acid Blue dyes (No. 1, 7, 9, 25, 40, 45, 62, 78, 80, 92, 102, 104, 113, 117, 127, 158, 175, 183, 193, 209, and the like); Acid Yellow dyes (No. 3, 7, 17, 19, 23, 25, 29, 38, 42, 49, 59, 61, 72, 73, 114, 128, 151, and the like); Direct Black dyes (No. 4, 14, 17, 22, 27, 38, 51, 112, 117, 154, 168, and the like); Direct Blue dyes (No. 1, 6, 8, 14, 15, 25, 71, 76, 78, 80, 86, 90, 106, 108, 123, 163, 165, 199, 226, and the like); Direct Red dyes (No. 1, 2, 16, 23, 24, 28, 39, 62, 72, 227, 236, and the like); Direct Yellow dyes (No. 4, 11, 12, 27, 28, 33, 34, 39, 50, 58, 86, 100, 106, 107, 118, 127, 132, 142, 157, and the like); anthraquinone dyes, monoazo dyes, disazo dyes, phthalocyanine derivatives, including various phthalocyanine sulfonate salts, aza annulenes, formazan copper complexes, triphenodioxazines, Bernacid Red 2BMN; Pontamine Brilliant Bond Blue A; Pontamine; Cibracron Brilliant Red 38-A (Reactive Red 4), available from Aldrich Chemical; Drimarene Brilliant Red X-2B (Reactive Red 56), available from Pylam, Inc.; Levafix Brilliant Red E-4B, available from Mobay Chemical; Levafix Brilliant Red E-6BA, available from Mobay Chemical; Procion Red H8B (Reactive Red 31), available from ICI America; Direct Brilliant Pink B Ground Crude, available from Crompton & Knowles; Cartasol Yellow GTF Presscake, available from Sandoz, Inc.; Cartasol Yellow GTF Liquid Special 110, available from Sandoz, Inc.; Yellow Shade 16948, available from Tricon, Basacid Black X34 (BASF X-34), available from BASF, Carta Black 2GT, available from Sandoz, Inc.; Neozapon Red 492 (BASF); Orasol Red G (Ciba-Geigy); Direct Brilliant Pink B (Crompton-Knolls); Aizen Spilon Red C-BH (Hodogaya Chemical Company); Kayanol Red 3BL (Nippon Kayaku Company); Levanol Brilliant Red 3BW (Mobay Chemical Company); Levaderm Lemon Yellow (Mobay Chemical Company); Spirit Fast Yellow 3G; Aizen Spilon Yellow C-GNH (Hodogaya Chemical Company); Sirius Supra Yellow GD 167; Cartasol Brilliant Yellow 4GF (Sandoz); Pergasol Yellow CGP (Ciba-Geigy); Orasol Black RL (Ciba-Geigy); Orasol Black RLP (Ciba-Geigy); Savinyl Black RLS (Sandoz); Dermacarbon 2GT (Sandoz); Pyrazol Black BG (ICI); Morfast Black Concentrate A (Morton-Thiokol); Diazol Black RN Quad (ICI); Orasol Blue GN (Ciba-Geigy); Savinyl Blue GLS (Sandoz); Luxol Blue MBSN (Morton-Thiokol); Sevron Blue 5GMF (ICI); Basacid Blue 750 (BASF); Bernacid Red, available from Berncolors, Poughkeepsie, N.Y.; Pontamine Brilliant Bond Blue; Berncolor A.Y. 34; Telon Fast Yellow 4GL-175; BASF Basacid Black SE 0228; various Reactive dyes, including Reactive Black dyes, Reactive Blue dyes, Reactive Red dyes including Reactive red 180, and the like, Reactive Yellow dyes including Reactive yellow 37, as well as mixtures thereof.

Pigments can be used in addition to, or instead or, dyes. A pigment may include one or more of blue pigments, for example, Palomar Blue B-4810 PB 15:3, Palomar Blue B-4710 PB 15:1, and Palomar Blue B-4900 pigments (all available from Bayer Corp.); and Sunfast Blue 15:3 presscake and Sunfast Blue 15:3 powder (available from Sun Chemical Corp.), red pigments, for example, magenta pigments like Quindo Magenta RV-6828 Pigment Red 122, Quindo Magenta RV-6831 Pigment Red 122 presscake, Quindo Red R-6713 PV 19, and Quindo Magenta RV-6843 Pigment Red 202 pigments (all available from Bayer Corp.); and Sunfast Magenta 122 and fast Magenta 202 pigments (both available from Sun Chemical Corp.), yellow pigments, for example, Fanchon Fast Y-5700 PY 139 and Fanchon Fast Yellow Y-5688 C.I. Pigment Yellow 150 pigments (available from Bayer Corp. of Rock Hill, S.C.); Sunbrite Yellow 14 presscake and Spectra Pac Yellow 83 pigments (both available from Sun Chemical Corp. of Cincinnati, Ohio); Sandorin Yellow 6GL (available from Clariant Corp. of Charlotte, N.C.); and Irgazin Yellow 2RLT PY 110, Irgazin Yellow 2GLTN PY 109, Irgazin Yellow 2GLTE PY 109, and Irgazin Yellow 3RLTN PY 110 pigments (all available from Ciba Geigy). The colorant may include a green pigment, for example, copper phthalocyanine green pigment like Pigment Green 1, Pigment Green 2, Pigment Green 7, and Pigment Green 36, and mixtures thereof.

A violet colorant may be used, for example, a quinacridone, a benzimidazolone pigment, Pigment Violet 19, Pigment Violet 3, Pigment Violet 32, and Pigment Violet 23, and mixtures thereof. An orange colorant may be used, for example, a beta-naphthol pigment, a Naphthol Reds pigment, Pigment Orange 5, Pigment Red 17, Pigment Red 188, Pigment Orange 62, Pigment Red 112, Pigment Red 255, Pigment Red 264, and Pigment Red 49:2, and mixtures thereof.

One or more black pigments, for example, carbon black, such as Special Black 4, Special Black 5, Special Black 6, Special Black 4A, Color Black FW 200, and Color Black FW2 pigments (all manufactured by Degussa Corporation of Ridgefield, N.J.); Raven 1200 carbon black, Raven 1170 carbon black, Raven 3500 carbon black, and Raven 5750 carbon black pigments (all available from Columbian Chemical Corp. of Atlanta, Ga.); Mogul L carbon black and Sterling NS carbon black pigments (both available from Cabot Corp. of Boston, Mass.); and Carbon Black MA-100 pigment (available from Mitsubishi Kasei Corp. of Tokyo, Japan) may be used.

The non-thermochromic colorant may be used in any suitable concentration. The minimum concentration of colorant which will produce a workable coloring composition is governed by the color intensity desired, although as little as 0.1% colorant by weight of the total composition can be sufficient for certain applications. The maximum workable concentration of colorant is determined largely by the ability to maintain a stable composition and the depth of color desired, and it can vary widely depending on the concentration of other components. However, a practical upper limit in the formulation of, for example, a ballpoint pen ink is about 20% dye or about 10% to 40% pigment by weight of the total composition. A preferred concentration range of from about 0.1% to about 20% dye or from about 0.1% to about 10% active pigment by weight of the total composition may be used. An even more preferred concentration of from about 1.5% to about 4% dye or from about 5% pigment by weight may be used, for example, when the marking composition is to be used as marker ink.

In addition to the aqueous carrier, marking compositions may further include a co-solvent. Co-solvents refer to solvents that provide additional benefits, for example, by modifying the properties of the compositions. In embodiments, the co-solvent may include a humectant. Suitable humectants may include organic materials miscible with water.

The humectant may include one or more of ethylene glycol, polyethylene glycol, propylene glycol, diethylene glycols, glycerine, dipropylene glycols, polypropylene glycols, sorbitol, amides, urea, substituted ureas, ethers, glycol ethers, carboxylic acids, esters, glycol esters, alcohols, organosulfides, organosulfoxides, sulfones (such as sulfolane), alcohol derivatives, carbitol, butyl carbitol, cellusolve, ether derivatives, amino alcohols, ketones, N-methylpyrrolidinone, 2-pyrrolidinone, cyclohexylpyrrolidone, hydroxyethers, amides, sulfoxides, lactones, and other water miscible materials, or combinations thereof. In embodiments, a preferred humectant is polyethylene glycol.

The co-solvent can be present in the composition in any suitable amount. For example, a ratio of the co-solvent to the aqueous carrier may be in a range of from about 100:0 to about 30:70, or from 97:3 to 30:70 by weight. In embodiments, a preferred ratio of the co-solvent to the aqueous carrier in a range from about 97:3 to about 50:50.

In embodiments, the marking composition may further include a defoamer. For example, the defoamer may resist or prevent the occurrence of bubbles or aeration in the composition, and promote a smooth, even, and uninterrupted marking by the marking composition. In embodiments, the defoamer includes one or more of silicones, insoluble oils, stearates, glycols, silicates, or talc. In embodiments, the defoamer includes an emulsion of a polyether siloxane copolymer.

The defoamer may be present in any suitable concentration, for example, a concentration effective to reduce or prevent the formation of bubbles. For example, the defoamer may be present in a range of from 0.1 to 10 % by weight. In some embodiments, the defoamer is preferably present in a range of from 0.5 to 2 % by weight.

In embodiments, the marking composition may further include a biocide. The biocide may reduce or prevent microbial deterioration or discoloration of the composition. In embodiments, the biocide comprises sodium omadine.

The biocide may be present in any suitable range. For example, the biocide may be present in a range of from 0.01 to 5 % by weight, or from 0.01 to 0.05 % by weight.

The pH of the marking composition may be controlled within a predetermined range. For example, in applications involving contact of the marking composition with metal or alloy, the pH may be adjusted to a more alkaline value to minimize undesirable interaction, such as corrosion, between the potential metal or alloy substrates or components of the writing instrument or a marked substrate and the marking composition. For example, the composition may have a pH in a range of from 7.5 to 11 is desirable.

Any suitable water-compatible base or alkaline agent may be used. For example, an organic amine may be used as a base. The amine may include one or more of primary amines, for example, methylamine, amino acids, and the buffering agent tris, primary aromatic amines, aniline. The amine may include or more of secondary amines, for example, dimethylamine, diphenylamine. The amine may include one or more of tertiary amines, for example, trimethylamine, triethanolamine, or EDTA. The amine may include one or more of cyclic amines, for example, aziridine, N-methylpiperidine, N-phenylpiperidine, or pyridine. Amines may be used in any suitable combination.

The base may be present in any suitable concentration. For example, a concentration that provides a pH in a range of from 7.5 to 11 may be used. In embodiments, the base is present in the marking composition in a concentration range of from 0.01 to 10 % by weight. In some embodiments, a preferable concentration range of 0.1 to 5 % by weight is used.

In embodiments, a marking composition includes a thermochromic slurry. The thermochromic slurry may include thermochromic capsules including a leuco dye, an activator, and a temperature regulator. The marking composition may further include water, for example, as a carrier. The marking composition may further include glycerol, for example, as a humectant. The marking composition may further include a defoamer including an emulsion of a polyether siloxane copolymer. The marking composition may further include a biocide including sodium omadine. The thermochromic capsules may have a volume average size from 1 micron to 10 microns so that the composition is configured to resist temperature-mediated discoloration at a temperature of at least up to 40 °C. The composition may have a pH in a range of 7.5 to 11.

In some such embodiments, the marking composition includes 60.00 % by weight of the thermochromic slurry, which is a green thermochromic slurry; 28.97 % by weight of water; 10.00 % by weight of glycerol; 1.00 % by weight of the defoamer; and 0.03% by weight of sodium omadine.

In some such embodiments, the marking composition includes 50.00 % by weight of the thermochromic slurry, which is a green thermochromic slurry; 28.97 % by weight of water; 10.00 % by weight of glycerol; 10.00 % by weight of the non-thermochromic colorant; 1.00 % by weight of the defoamer; and 0.03 % by weight of sodium omadine.

Marking compositions according to the disclosure may be applied using any suitable applicator or writing instrument. In embodiments, a writing instrument including a reservoir may include any marking composition according to the present disclosure, a marking end fluidically coupled to the reservoir. In embodiments, the writing instrument may further include an eraser. The eraser may be made of any suitable material, for example, a material that generates sufficient frictional heat to at least partially or substantially change the color, decolorize, or erase markings made using marking compositions according to the disclosure. For example, the eraser may include natural or synthetic rubber, for example, a silicone, a styrenebased polymer, styrene butadiene styrene (SBS), or styrene ethylene butadiene styrene (SEBS).

### EXAMPLES

### EXAMPLE 1

60 grams of a green thermochromic slurry having an average particle size of 1.3 microns (UMC, New Jersey, NJ), 28.97 grams of deionized water, 10 grams of glycerol, 1.0 grams of defoamer (Foamex 825, Evonik, Germany) and 0.03 grams of sodium omadine were mixed until a homogenous mixture was attained. Such ink was inserted to a refill tube fitted with a gel point. The refill was centrifuged and used to create a line on paper. The green mark was placed in an oven at 50 °C and the green color did not disappear. However, upon application of a plastic eraser, the color disappeared.

### EXAMPLE 2

50 grams of a green thermochromic slurry (UMC, New Jersey, NJ), 28.97 grams of deionized water, 10 grams of glycerol, 10 grams of Access Red (Milliken, Spartanburg, NC), 1.0 grams of defoamer (Foamex 825, Evonik, Germany) and 0.03 grams of sodium omadine were mixed until a homogenous mixture was attained. Such ink was inserted to a refill tube fitted with a gel point. The refill was centrifuged and used to create a black line on paper. The black mark was placed in an oven at 50 °C and the black color did not disappear. However, upon application of a plastic eraser, the color changed from Black to Red.

While the disclosure has been described with reference to a number of embodiments, it will be understood by those skilled in the art that the invention is not limited to such disclosed embodiments. Rather, the invention can be modified to incorporate any number of variations, alterations, substitutions, or equivalent arrangements not described herein, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A marking composition comprising:
an aqueous carrier; and
thermochromic capsules comprising a leuco dye, an activator, and a temperature regulator,
wherein the thermochromic capsules have a volume average size effective to resist temperature-mediated discoloration at a temperature of at least up to 40 °C by dissipating heat.

2. The composition of claim 1, wherein the thermochromic capsules have a volume average size in a range from 1 micron to 10 microns or from 1 micron to 5 microns.

3. The composition of claim 1, wherein the composition is configured to mark a substrate with a mark that changes appearance in response to frictional contact with an eraser,
optionally, wherein the mark is substantially erasable in response to the frictional contact, or wherein the composition further comprises a non-thermochromic colorant, wherein the mark is configured to change color in response to the frictional contact, preferably wherein the non-thermochromic colorant comprises a pigment or a dye, and more preferably, wherein the non-thermochromic colorant is present in a range of from 0.1% to 40 % by weight.

4. The composition of any one of claims 1 to 3, wherein the thermochromic capsules are configured to resist temperature-mediated discoloration at a temperature of up to 50 °C or up to 60 °C.

5. The composition of any preceding claim, wherein the thermochromic capsules are present in a range of from 5 to 70 % by weight, and/or wherein the aqueous carrier consists essentially of deionized water, optionally, wherein the aqueous carrier is present in a range of from 10 to 80 % by weight.

6. The composition of any preceding claim, further comprising a co-solvent comprising a humectant,
optionally, wherein the co-solvent comprises one or more of polyethylene glycol, ethylene glycol, propylene glycol, diethylene glycols, glycerine, dipropylene glycols, polypropylene glycols, sorbitol, amides, urea, substituted ureas, ethers, carboxylic acids, esters, alcohols, organosulfides, organosulfoxides, sulfones, alcohol derivatives, carbitol, butyl carbitol, cellusolve, ether derivatives, amino alcohols, ketones, N-methylpyrrolidinone, 2-pyrrolidinone, cyclohexylpyrrolidone, hydroxyethers, amides, sulfoxides, or lactones,
preferably, wherein the co-solvent comprises polyethylene glycol or glycerol,
and more preferably, wherein a ratio of the co-solvent to the aqueous carrier is in a range of from 97:3 to 30:70 by weight.

7. The composition of any preceding claim, further comprising a defoamer, optionally,wherein the defoamer comprises one or more of silicones, insoluble oils, stearates, glycols, silicates, or talc, preferablywherein the defoamer comprises an emulsion of a polyether siloxane copolymer, and more preferably, wherein the defoamer is present in a range of from 0.1 to 10 % by weight.

8. The composition of any preceding claim, further comprising a biocide, optionally, wherein the biocide comprises sodium omadine, and further optionally, wherein the biocide is present in a range of from 0.01 to 5 % by weight.

9. The composition of any preceding claim, wherein the composition has an alkaline pH, optionally, wherein the pH is in a range of from 7.5 to 11, and further optionally, wherein the composition comprises a base, wherein the base comprises an amine, an amino acid, or tris(hydroxymethyl)aminomethane, preferably wherein the base is present in a range of from 0.01 to 10 % by weight.

10. A marking composition according to claim 1, comprising:
a thermochromic slurry, the thermochromic slurry comprising the thermochromic capsules comprising a leuco dye, an activator, and a temperature regulator;
water;
glycerol;
a defoamer comprising an emulsion of a polyether siloxane copolymer; and
a biocide comprising sodium omadine,
wherein the thermochromic capsules have a volume average size from 1 micron to 10 microns so that the composition is configured to resist temperature-mediated discoloration at a temperature of at least up to 40 °C, or up to 50 °C, or up to 60°C, and
wherein the composition has a pH in a range of from 7.5 to 11.

11. The composition of claim 10, wherein the composition is configured to mark a substrate with a mark that is configured to change appearance in response to a frictional contact with an eraser,
optionally, wherein the mark is substantially erasable in response to the frictional contact,
or wherein the composition comprises a non-thermochromic colorant, optionally, wherein the non-thermochromic colorant comprises a dye or a pigment, and further optionally, wherein the composition is configured to mark a substrate with a mark which is configured to change color in response to a frictional contact with an eraser.

12. The composition of claim 10 or claim 11, comprising:
60.00 % by weight of the thermochromic slurry, which is a green thermochromic slurry;
28.97 % by weight of water;
10.00 % by weight of glycerol;
1.00 % by weight of the defoamer; and
0.03% by weight of sodium omadine.

13. The composition of claim 10 or claim 11, comprising:
50.00 % by weight of the thermochromic slurry, which is a green thermochromic slurry;
28.97 % by weight of water;
10.00 % by weight of glycerol;
10.00 % by weight of the non-thermochromic colorant;
1.00 % by weight of the defoamer; and
0.03 % by weight of sodium omadine.

14. A writing instrument comprising a reservoir comprising the composition of any preceding claim, and a marking end fluidically coupled to the reservoir.

15. The writing instrument of claim 14, further comprising an eraser.
